# EUROPEAN PATENT APPLICATION

(11) **EP 4 693 548 A1**
(43) Date of publication of application: **11.02.2026**
(21) Application number: 25182388.6
(22) Date of filing: 12.06.2025
(51) Int. Cl.: H01M 10/04, H01M 10/613, H01M 10/625, H01M 10/647, H01M 10/6556, H01M 10/6557, H01M 10/6567, H01M 50/209, H01M 50/204, H01M 50/244, H01M 50/249, H01M 50/291, H01M 50/293, H01M 10/6564

(54) **BATTERY PACK AND BATTERY PACK MANUFACTURING METHODS**

(30) Priority: 06.08.2024 JP 2024130170
(71) Applicant: TOYOTA JIDOSHA KABUSHIKI KAISHA, Toyota-shi, Aichi-ken 471-8571 (JP)
(72) Inventor: YAMASHITA, Osamu, Toyota-shi, 471-8571 (JP)
(74) Representative: Kuhnen & Wacker Patent- und Rechtsanwaltsbüro PartG mbB

(57) **Abstract**

A battery pack 1 includes: a plurality of battery cells 2; a case 3 accommodating the plurality of battery cells 2; and a cooling device 4 provided inside the case 3 to cool the battery cells 2 with a coolant. The cooling device 4 includes a plurality of coolers 10. The cooler 10 includes: a flow path 13 that allows the coolant to circulate; and a cooling surface 10a that comes in contact with the battery cells 2. The plurality of coolers 10 and the plurality of battery cells 2 are alternately stacked in an X direction inside the case 3. The cooling device 4 is an integrated structure in which the plurality of coolers 10 is joined with each other. The cooler 10 is deformable so as to displace the cooling surface 10a in the X direction in accordance with a pressure inside the cooler 10.

## Description

### BACKGROUND OF THE INVENTION

### 1. Field of the Invention

The present invention relates to a battery pack and a battery pack manufacturing method.

### 2. Description of the Related Art

Patent Document 1 discloses a battery pack including a cooling device provided to cool a plurality of battery cells and located inside a case that accommodates the battery cells. The battery pack described in Patent Document 1 has a configuration in which the cooling device includes a plurality of coolers, with the plurality of coolers and the plurality of battery cells being alternately stacked.

### PRIOR ART DOCUMENT

### PATENT DOCUMENT

Patent Document 1: JP 2024-509489 A

### SUMMARY OF THE INVENTION

### PROBLEM TO BE SOLVED BY THE INVENTION

In the configuration described in Patent Document 1, a tube member different from the cooler is required as a member for connecting adjacent coolers. This increases the number of components, leading to complicated assembly and increased cost.

The present invention has been made in view of the above circumstances, and aims to provide a battery pack and a battery pack manufacturing method capable of reducing the number of components, facilitating assembly, and reducing the assembly cost.

According to the present invention, a battery pack includes: a plurality of battery cells; a case to accommodate the plurality of battery cells; and a cooling device, provided inside the case, for cooling the battery cells with a coolant, the cooling device including a plurality of coolers, the cooler including: a flow path that allows the coolant to circulate; and a cooling surface that comes in contact with the battery cells, and the plurality of coolers and the plurality of battery cells being alternately stacked in a first direction inside the case. Further, the cooling device is an integrated structure in which the plurality of coolers is joined with each other, and the cooler is deformable so as to displace the cooling surface in the first direction in accordance with a pressure inside the cooler.

With this configuration, the cooler of the integrated structure can be installed in the case, leading to facilitated assembly and reduced assembly cost.

When the pressure inside the cooler is in a negative pressure state lower than a pressure outside the cooler in a state where the cooler is disposed inside the case, the cooler may be deformed to displace the cooling surface to a position not coming in contact with the battery cell.

This configuration facilitates insertion of the battery cell between the coolers.

The cooler may include: a diaphragm portion including the cooling surface; a flat plate portion formed on a peripheral edge of the diaphragm portion and extending in a second direction orthogonal to the first direction; and a tube portion extending from the flat plate portion in the first direction.

With this configuration, when the battery cell is inserted between the coolers, the cooling surface can be deformed so as to be depressed by the diaphragm portion. This facilitates insertion of the battery cell.

In the coolers being adjacent to each other, the tube portion of one cooler and the tube portion of the other cooler may be joined with each other.

This configuration allows the coolers to be joined to each other, making it possible to reduce the number of components.

When the pressure inside the cooler is a pressure higher than a pressure outside the cooler in a state where the cooler is disposed inside the case, the cooler may be deformed to displace the cooling surface to a position coming in contact with the battery cell.

With this configuration, by increasing the pressure inside the cooler, the cooler is deformed so as to expand, making it possible to bring the cooling surface into close contact with the battery cell.

According to the present invention, a battery pack manufacturing method, includes: a joining step of joining a plurality of coolers so as to form a cooling device being an integrated structure including the plurality of coolers and so as to form a structure in which the coolers have their cooling surfaces facing each other; an installation step of installing the cooling device being the integrated structure, inside a case for accommodating a plurality of battery cells; a deformation step of deforming the cooler so as to displace the cooling surface to a position not coming in contact with the battery cells by setting a pressure inside the cooler to a negative pressure state lower than a pressure outside the cooler, the deformation step being performed after the cooling device being the integrated structure is installed inside the case; an insertion step of inserting the battery cells between the coolers adjacent to each other in a state where the cooling surface is displaced due to the negative pressure state; and a contact step of canceling the negative pressure state and bringing the cooling surface into contact with the battery cells, the contact step being performed after the battery cells are inserted between the coolers.

With this configuration, by setting the inside of the cooler to a negative pressure state when the battery cells are disposed between the coolers, the battery cells can be easily inserted. In addition, the cooling device is an integrated structure, making it possible to facilitate assembly and reduce assembly cost.

The cooling device being the integrated structure has a structure in which the coolers are joined to each other, and the joining step may include a step of joining the coolers to each other by brazing.

With this configuration, an integrated structure can be formed by brazing, facilitating the assembly.

The insertion step may include a step of disposing the battery cells inside the case at a position where the battery cells and the cooling surface are not in contact with each other in a state where the cooler is deformed, and the contact step may include a step of causing the cooling surface to abut on the battery cells to form a stacked body in which the cooler and the battery cells are stacked, and of compressing the battery cells in a stacking direction of the stacked body by the cooler.

This configuration facilitates insertion of the battery cell, and facilitates assembly.

According to the present invention, a battery pack manufacturing method, includes: a joining step of joining a plurality of coolers so as to form a cooling device being an integrated structure including the plurality of coolers and so as to form a structure in which the coolers have their cooling surfaces facing each other; an installation step of installing the cooling device being the integrated structure, inside a case for accommodating a plurality of battery cells; an insertion step of inserting the battery cells between the coolers adjacent to each other after the cooling device being the integrated structure is installed inside the case; and a deformation step of deforming the cooler so as to displace the cooling surface to a position coming in contact with the battery cells by setting a pressure inside the cooler to be higher than a pressure outside the cooler, the deformation step being performed after the battery cell is inserted between the coolers.

This configuration facilitates insertion of the battery cells when the battery cells are disposed between the coolers. In addition, the cooling device is an integrated structure, making it possible to facilitate assembly and reduce assembly cost.

The cooling device being the integrated structure may have a structure in which the coolers are joined to a pipe, and the joining step may include a step of joining the coolers and the pipe to each other by brazing.

This configuration can form an integrated structure in which the cooler and the pipe are brazed to each other, facilitating assembly.

The insertion step may include a step of disposing the battery cells inside the case at a position where the battery cells and the cooling surface are not in contact with each other in a state where the cooler is not deformed, and the deformation step may include a step of causing the cooling surface to abut on the battery cells to form a stacked body in which the cooler and the battery cells are stacked, and of compressing the battery cells in a stacking direction of the stacked body by the cooler.

With this configuration, there is no need to perform deformation of the cooler when the battery cell is inserted, facilitating insertion of the battery cell.

### EFFECT OF THE INVENTION

The present invention can reduce the number of components, facilitate assembly, and reduce the assembly cost.

### BRIEF DESCRIPTION OF THE DRAWINGS

FIG. 1 is a diagram schematically illustrating a battery pack according to an embodiment;
FIG. 2 is a diagram illustrating a cooling device being an integrated structure;
FIG. 3 is a diagram illustrating a cooler;
FIG. 4 is a diagram for illustrating a structure of a cooler;
FIG. 5 is a diagram for illustrating a state where a coolant circulates in a cooler;
FIG. 6 is a flowchart illustrating a battery pack manufacturing method;
FIG. 7 is a diagram illustrating a state where a cooling device is installed inside a case;
FIG. 8 is a diagram illustrating a state of setting the inside of the cooler to a negative pressure state to deform the cooler;
FIG. 9 is a diagram for illustrating a state before the cooler is deformed;
FIG. 10 is a diagram for illustrating a state where the cooler is deformed;

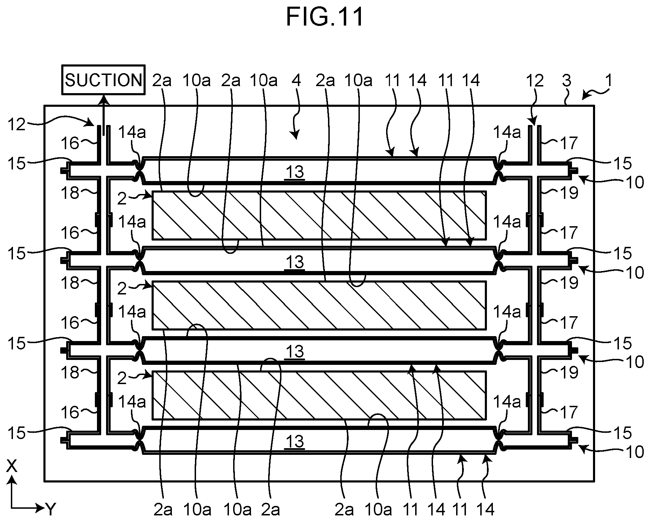

FIG. 11 is a diagram for illustrating a state where a battery cell is inserted between coolers in a state where the coolers are deformed;
FIG. 12 is a diagram illustrating a structure having a plurality of battery cells disposed in a Y direction;
FIG. 13 is a diagram schematically illustrating a battery pack in a modification;
FIG. 14 is a diagram illustrating a cooling device being an integrated structure in a modification;
FIG. 15 is a diagram for illustrating a cooling device;
FIG. 16 is a diagram for illustrating a state after the cooler is deformed;
FIG. 17 is a diagram for illustrating a state before the cooler is deformed;
FIG. 18 is a flowchart illustrating a battery pack manufacturing method in a modification;
FIG. 19 is a diagram for illustrating an installation step of disposing the cooling device inside the case;
FIG. 20 is a diagram for illustrating an insertion step of inserting a battery cell; and
FIG. 21 is a diagram for illustrating a deformation step of deforming the cooler.

### DETAILED DESCRIPTION OF THE PREFERRED EMBODIMENTS

Hereinafter, a battery pack and a battery pack manufacturing method according to an embodiment of the present invention will be specifically described. The present invention is not limited to the embodiment described below.

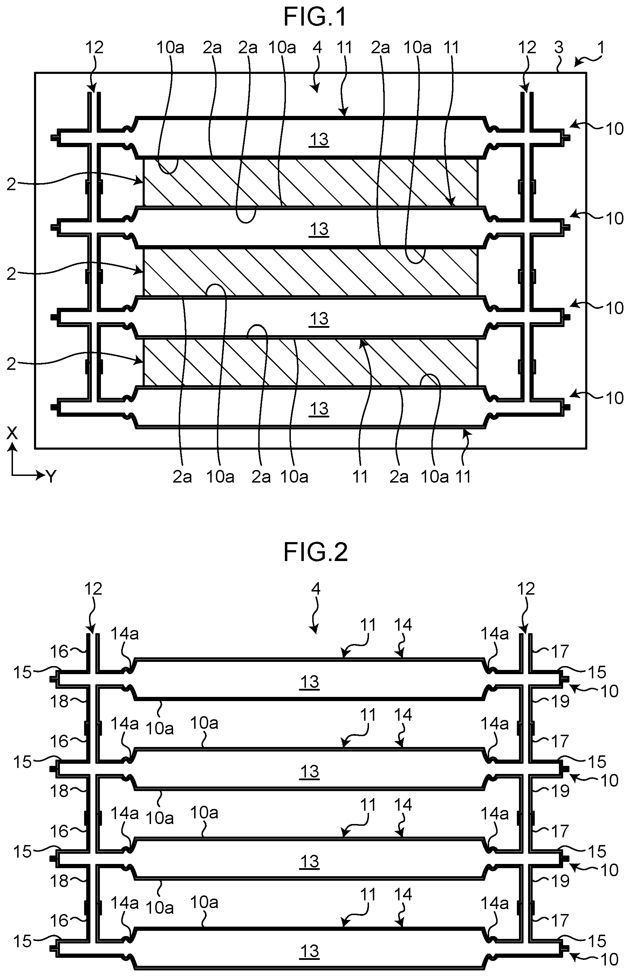

FIG. 1 is a diagram schematically illustrating a battery pack according to the embodiment. A battery pack 1 includes a plurality of battery cells 2, a case 3 to accommodate the plurality of battery cells 2, and a cooling device 4 to cool the battery cells 2. For example, the battery pack 1 is mounted on a battery electric vehicle. In the battery electric vehicle on which the battery pack 1 is mounted, the electric power stored in the battery pack 1 is supplied to the traveling motor.

The battery cell 2 is a battery formed in a rectangular parallelepiped shape. The battery cell 2 includes a flat surface 2a having a maximum area, among surfaces of the battery cell 2. The battery cell 2 is disposed inside the case 3 so as to have the flat surface 2a facing an X direction. The X direction is a first direction. The plurality of battery cells 2 is stacked in the X direction inside the case 3.

The case 3 is a case for accommodating the plurality of battery cells 2. The case 3 accommodates the cooling device 4 together with the plurality of battery cells 2. For example, the case 3 includes an upper case and a lower case. Inside the case 3, the plurality of battery cells 2 can constitute a battery module. Accordingly, the case 3 can accommodate a plurality of battery modules each including the plurality of battery cells 2.

The cooling device 4 is provided inside the case 3 and uses the coolant to cool the battery cell 2. The cooling device 4 includes a plurality of coolers 10. The cooler 10 has a cooling surface 10a that comes in contact with the battery cell 2. The cooler 10 is formed of a metal member. As illustrated in FIG. 2, the cooling device 4 is an integrated structure in which a plurality of coolers 10 are joined to each other, and is a structure in which the coolers 10 have their cooling surfaces 10a facing each other. In the cooling device 4, the coolers 10 are brazed to each other.

In a state where the battery pack 1 is completed, a stacked body is formed inside the case 3. The stacked body has a structure in which a plurality of coolers 10 and a plurality of battery cells 2 are alternately stacked in the X direction. The coolers 10 are located on both end sides of the stacked body in the stacking direction. The stacking direction is the same as the X direction. The battery cell 2 has a square shape and the cooler 10 has a flat plate shape, forming one battery cell 2 sandwiched between two coolers 10. The battery cell 2 and the cooler 10 are stacked such that surfaces having a maximum area among a plurality of surfaces are in contact with each other. The cooling surface 10a comes in contact with the flat surface 2a of the battery cell 2.

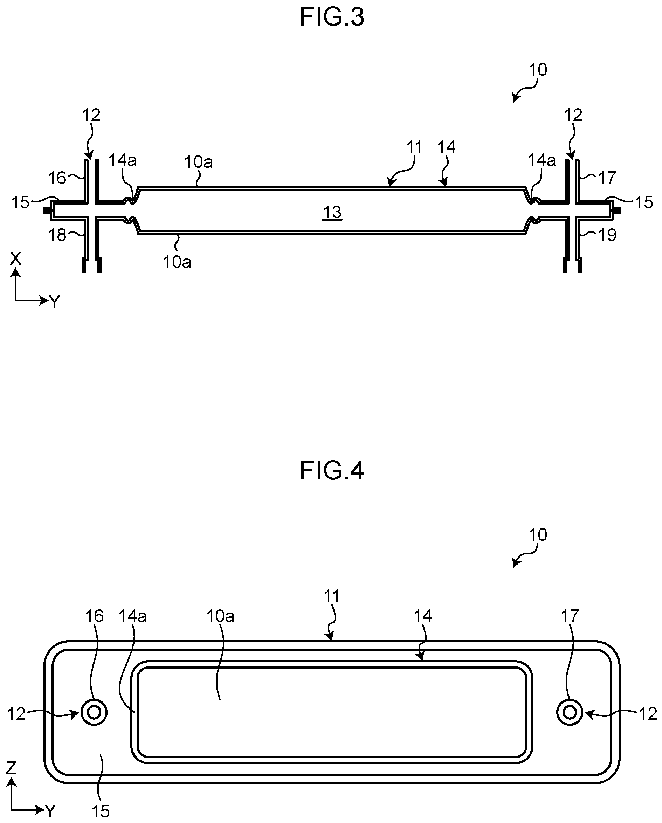

As illustrated in FIG. 3, the cooler 10 includes a cooling portion 11 and a tube portion 12.

The cooling portion 11 is formed in a hollow plate shape. The cooling portion 11 internally includes a flow path 13 that allows the coolant to circulate. The internal space of the cooling portion 11 forms the flow path 13 of the coolant. As illustrated in FIG. 1, in a state where the cooling device 4 is accommodated in the case 3, the cooling portion 11 extends in a Y direction orthogonal to the X direction. The Y direction is a second direction. The cooling portion 11 is disposed between the battery cells 2 and constitutes the stacked body together with the battery cells 2. The cooling portion 11 includes the cooling surface 10a. As illustrated in FIG. 4, when the cooler 10 is viewed in the X direction, the cooling portion 11 is formed in a quadrangular shape. The cooling portion 11 includes a diaphragm portion 14 and a flat plate portion 15.

The diaphragm portion 14, being a portion including the cooling surface 10a, is deformable so as to displace the cooling surface 10a in the X direction according to the pressure inside the cooler 10. The cooling portion 11 has the diaphragm portions 14 on both sides in the X direction. With the diaphragm portion 14 being deformable, the cooler 10 is deformable to vary the thickness of the cooling portion 11. The diaphragm portion 14 has a groove 14a formed in a frame shape so as to surround the cooling surface 10a. The diaphragm portion 14 can be elastically deformed so as to allow the cooling surface 10a surrounded by the groove 14a to be displaced in the X direction. The diaphragm portion 14 can return to the original shape after being deformed to depress the cooling surface 10a.

As illustrated in FIG. 4, the diaphragm portion 14 is formed in a rectangular shape in which the Y direction is a longitudinal direction and the Z direction is a transverse direction. The Z direction is a direction orthogonal to the Y direction and orthogonal to the X direction. The groove 14a is formed in a quadrangular frame shape in which the Y direction is the longitudinal direction and the Z direction is the transverse direction. The cooling surface 10a is formed in a rectangular shape in which the Y direction is the longitudinal direction and the Z direction is the transverse direction.

The flat plate portion 15 is formed on a peripheral edge of the diaphragm portion 14 and extends in the Y direction. The flat plate portion 15 includes a flat surface facing the X direction. The flat plate portion 15 supports the diaphragm portion 14 and is not deformed even when the diaphragm portion 14 is deformed. The rigidity of the flat plate portion 15 is higher than the rigidity of the groove 14a. The tube portion 12 is provided in a portion of the flat plate portion 15 outside the diaphragm portion 14 in the Y direction.

The tube portion 12 is a straight tube portion extending in the X direction from the flat plate portion 15. The tube portion 12 communicates with the flow path 13.

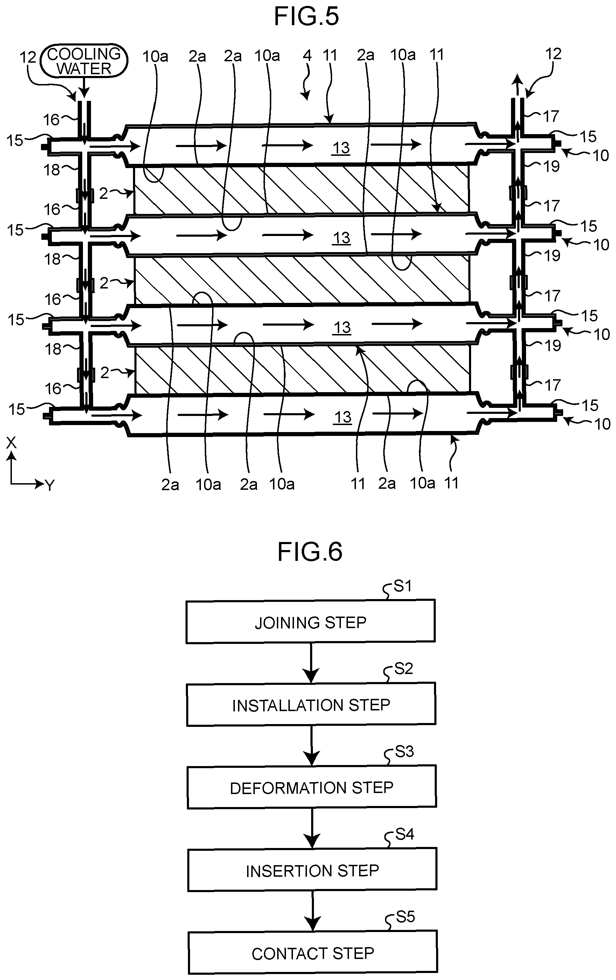

The tube portion 12 includes: a first tube portion 16 that supplies a coolant to the flow path 13; and a second tube portion 17 through which the coolant circulating through the flow path 13 flows. The first tube portion 16 is a supply tube portion provided on the upstream side of the flow path 13. The second tube portion 17 is a discharge tube portion provided on the downstream side of the flow path 13. As illustrated in FIG. 5, the coolant supplied from the cooler 10 flows from the first tube portion 16 into the flow path 13 in the cooling portion 11. Inside the cooling portion 11, the coolant circulates in the flow path 13 in the Y direction from an inlet on the first tube portion 16 side toward an outlet on the second tube portion 17 side. The coolant circulated in the cooling portion 11 flows out from the flow path 13 to the second tube portion 17.

The tube portion 12 includes a third tube portion 18 and a fourth tube portion 19. The third tube portion 18 is a connection tube portion connected to the adjacent coolers 10, and is provided to circulate a coolant before heat exchange with the battery cell 2. In the cooler 10 including the third tube portion 18, the third tube portion 18 is provided on the downstream side of the first tube portion 16, and the downstream side of the first tube portion 16 branches into the flow path 13 and the third tube portion 18. The third tube portion 18 supplies the coolant flowing into the flat plate portion 15 from the first tube portion 16 to the adjacent coolers 10. In the coolers 10 adjacent to each other, the third tube portion 18 of one cooler 10 is connected to the first tube portion 16 of the other cooler 10.

The fourth tube portion 19 is a connection tube portion connected to the adjacent coolers 10, and is provided to allow the coolant after heat exchange with the battery cell 2 to circulate. The fourth tube portion 19 is connected to the second tube portion 17 of the adjacent cooler 10. In the coolers 10 adjacent to each other, the fourth tube portion 19 of one cooler 10 is connected to the second tube portion 17 of the other cooler 10. The fourth tube portion 19 supplies the coolant flowing in from the adjacent cooler 10 to the second tube portion 17 of the own cooler 10. In the cooler 10 including the fourth tube portion 19, the fourth tube portion 19 is provided on the upstream side of the second tube portion 17, and the flow path 13 and the fourth tube portion 19 merge on the upstream side of the second tube portion 17.

In the coolers 10 adjacent to each other, the tube portion 12 of one cooler 10 and the tube portion 12 of the other cooler 10 are joined to each other. As illustrated in FIG. 2, in the coolers 10 adjacent to each other, the first tube portion 16 of one cooler 10 is fitted to the third tube portion 18 of the other cooler 10. The third tube portion 18 and the first tube portion 16 in the fitted state are joined to each other by brazing. Similarly, in the coolers 10 adjacent to each other, the second tube portion 17 of one cooler 10 is fitted to the fourth tube portion 19 of the other cooler 10. The fourth tube portion 19 and the second tube portion 17 in the fitted state are joined to each other by brazing.

As illustrated in FIG. 5, in the cooler 10 of the cooling device 4, the flow paths 13 are connected in parallel, allowing the coolant to circulate through each of the flow paths 13. The plurality of coolers 10 are coupled to each other by the tube portion 12. In the cooler 10 disposed on one end side in the X direction, the first tube portion 16 serves as an inlet of the cooling device 4, while the second tube portion 17 serves as an outlet of the cooling device 4. The cooler 10 disposed on the other end side in the X direction has no third tube portion 18 or the fourth tube portion 19.

FIG. 6 is a flowchart illustrating a battery pack manufacturing method. The method of manufacturing the battery pack 1 includes a joining step (step S1), an installation step (step S2), a deformation step (step S3), an insertion step (step S4), and a contact step (step S5).

First, the joining step joins the plurality of coolers 10 (step S1). In the joining step, the plurality of coolers 10 is joined to each other by brazing such that the coolers 10 form an integrated structure in which the cooling surfaces 10a face each other. At this time, the coolers 10 are brazed to each other. In the joining step, all the coolers 10 are joined, and all the components constituting the cooling device 4 are joined by brazing. For example, in the joining step, brazing is performed by applying paste containing a brazing material to a portion to be joined, and then putting the portion in a furnace. The portion to be joined includes a portion where the first tube portion 16 is fitted into the third tube portion 18 and a portion where the second tube portion 17 is fitted into the fourth tube portion 19.

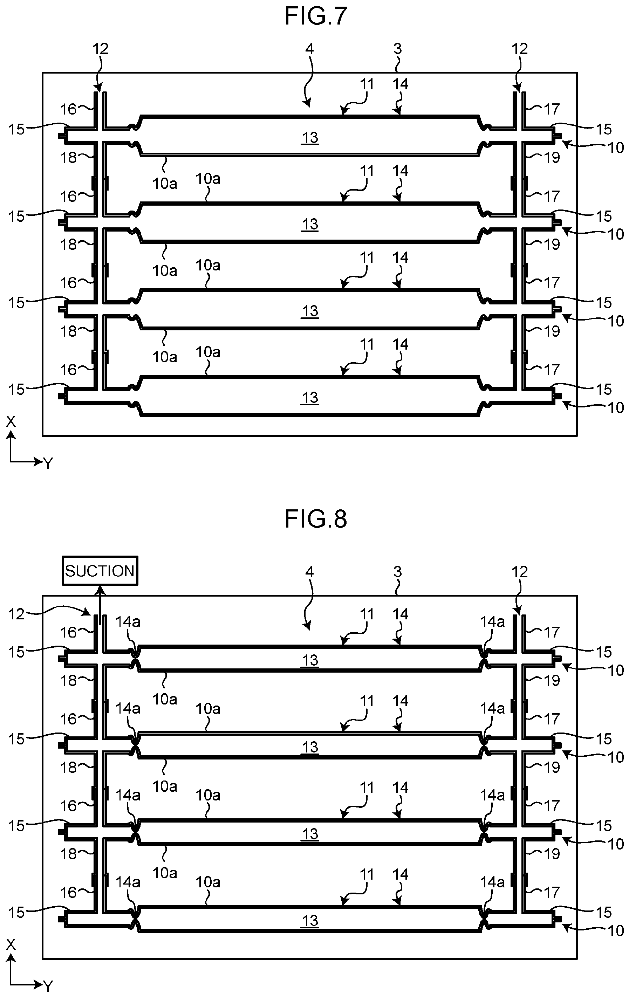

Next, in the installation step, the cooling device 4 being an integrated structure is installed inside the case 3 (step S2). In the installation step, as illustrated in FIG. 7, the cooling device 4, being an integrated structure, is installed inside the case 3 in a state where the battery cell 2 is not installed.

Next, the deformation step sets the inside of the cooler 10 to a negative pressure state to depress the diaphragm portion 14 (step S3). In the deformation step, after the cooling device 4 is disposed inside the case 3, as illustrated in FIG. 8, the fluid inside the cooler 10 is sucked from the first tube portion 16 side on the most upstream side to set the inside of the cooler 10 to a negative pressure state in a state where the second tube portion 17 side on the most downstream side is closed by a valve or the like. The negative pressure state of the cooler 10 is a state where the pressure inside the cooler 10 is lower than the pressure outside the cooler 10. At this time, the fluid sucked from the inside of the cooler 10 may be either gas or liquid. Setting the inside of the cooler 10 to a negative pressure state will deform the diaphragm portion 14, making it possible to deform the cooler 10 such that the flow path 13 inside the cooler 10 is narrowed in the X direction. The diaphragm portion 14 is deformable so as to reduce the thickness of the cooling portion 11 by setting the inside of the cooler 10 to a negative pressure state.

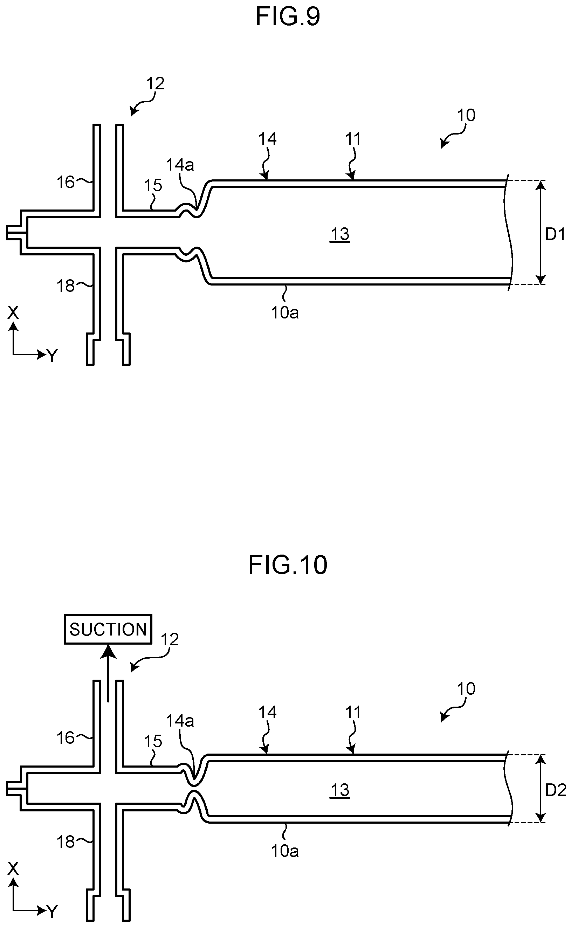

As illustrated in FIG. 9, in the cooler 10 in a state where the diaphragm portion 14 is not deformed before the inside of the cooler 10 is in a negative pressure state, the thickness of the cooling portion 11 in the X direction is to be a thickness D1. As illustrated in FIG. 10, in the cooler 10 in a state where the diaphragm portion 14 is deformed after the inside of the cooler 10 is in a negative pressure state, the thickness of the cooling portion 11 in the X direction is to be a thickness D2. The thickness D2 after deformation is smaller than the thickness D1 before the deformation. In the deformation step, deforming the diaphragm portion 14 to lower the thickness of the cooling portion 11 to the size such as the thickness D2 indicates deformation of the cooler 10 to displace the cooling surface 10a to a position which is not coming in contact with the battery cell 2. The deformation step sets the inside of the cooler 10 to a negative pressure state before the battery cell 2 is installed inside the case 3, thereby deforming the diaphragm portion 14 so as to displace the cooling surface 10a a to a position which is not coming in contact with the flat surface 2a.

Next, the insertion step inserts the battery cells 2 between the coolers 10 (step S4). In the insertion step, the battery cells 2 are inserted into spaces where cooling surfaces 10a face each other between adjacent coolers 10 in a state where the negative pressure state inside the cooler 10 has deformed the diaphragm portion 14 so as to displace the cooling surfaces 10a. When the negative pressure state inside the cooler 10 has deformed the diaphragm portion 14, the cooling surface 10a is displaced in the X direction so as to be displaced to a position not coming in contact with the flat surface 2a of the battery cell 2. With this displacement, a gap is obtained between battery cell 2 and cooling surface 10a in the X direction. In the insertion step, in a state where the cooler 10 is deformed, the battery cell 2 is disposed at a position where the battery cell 2 and the cooling surface 10a are not in contact with each other in a space where the cooling surfaces 10a face each other.

Subsequently, the contact step cancels the negative pressure state of the cooler 10 to bring the cooling surface 10a into contact with the battery cell 2 (step S5). In the contact step, after the battery cell 2 is inserted into a facing space between the cooling surfaces 10a, the suction of the fluid from the first tube portion 16 side is stopped to cancel the negative pressure state of the cooler 10, so as to cancel the deformation of the diaphragm portion 14. When the deformation of the diaphragm portion 14 is canceled, the thickness of the cooling portion 11 in the X direction is to return from the thickness D2 to the thickness D1, making it possible to bring the cooling surface 10a into contact with the flat surface 2a of the battery cell 2. In the contact step, the cooling surface 10a is caused to abut on the battery cells 2 to form a stacked body in which the coolers 10 and the battery cells 2 are stacked, and the cooler 10 compresses the battery cells 2 in the stacking direction of the stacked body.

As described above, according to the embodiment, there is no need to provide a tube member for connecting the adjacent coolers 10 to each other, making it possible to reduce the number of components. All the coolers 10 in the cooling device 4 are joined by brazing, facilitating assembly and suppressing the assembly cost.

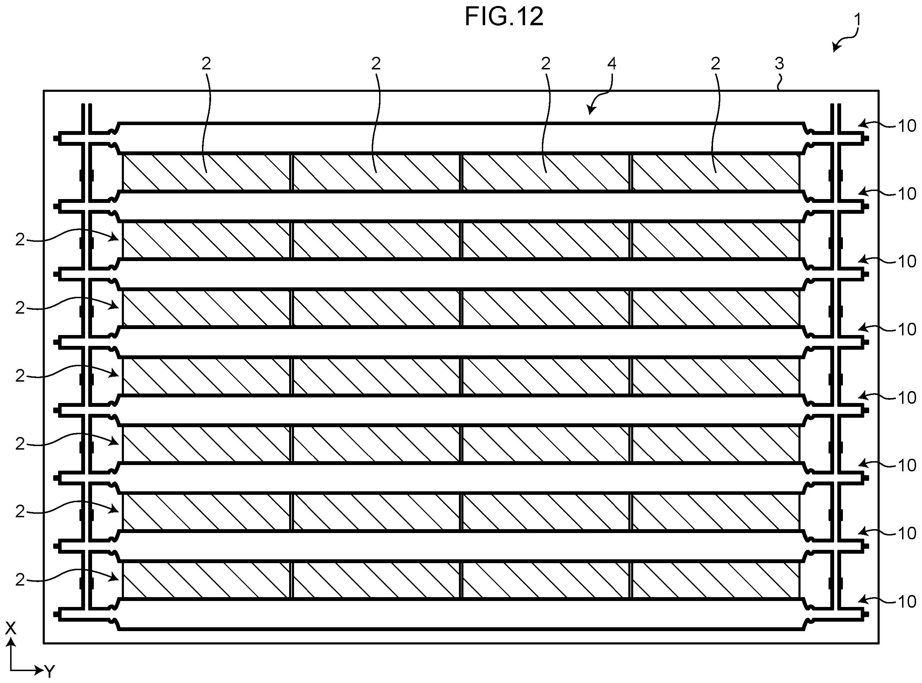

The number of battery cells 2 is not particularly limited. The number of the battery cells 2 stacked in the X direction (number of stacked layers) is not limited. It is also allowable to adopt a structure in which the plurality of battery cells 2 is aligned in the Y direction. As illustrated in FIG. 12, the battery pack 1 has a structure in which four battery cells 2 are aligned in the Y direction and seven battery cells 2 are disposed so as to be stacked in the X direction. In this case, one cooling surface 10a comes in contact with the four battery cells 2.

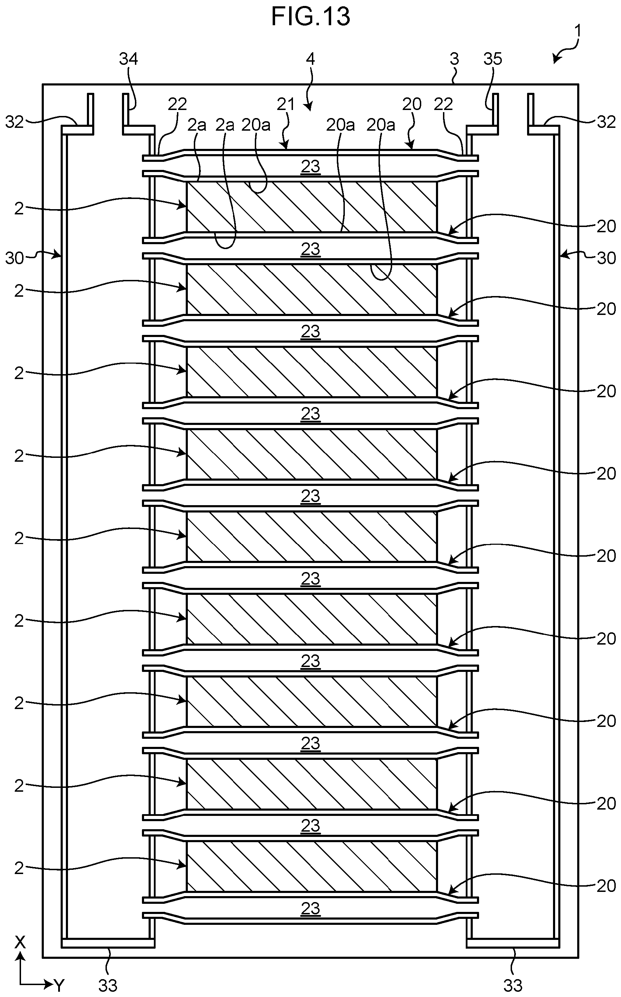

In addition, the cooling device 4 is only required to have an integrated structure in which members constituting the cooling device 4 are joined, and is not limited to a structure in which the coolers 10 are joined to each other. Furthermore, the cooling device 4 is only required to have a structure in which the cooling surface 10a is displaced in the X direction in accordance with the pressure inside the cooler 10, and is not limited to the structure in which the diaphragm portion 14 is deformed by setting the inside of the cooler 10 to a negative pressure state. Therefore, examples of modifications of the battery pack 1 are illustrated in FIGS. 13 to 17.

As illustrated in FIG. 13, battery pack 1 according to the modification is equipped with a cooling device 4 including a cooler 20 and a pipe 30. The cooling device 4 includes a plurality of coolers 20 and a pair of pipes 30. The cooler 20 is deformable so as to increase the thickness in the X direction. FIG. 13 illustrates the cooler 20 after deformation to have an increased thickness in the X direction.

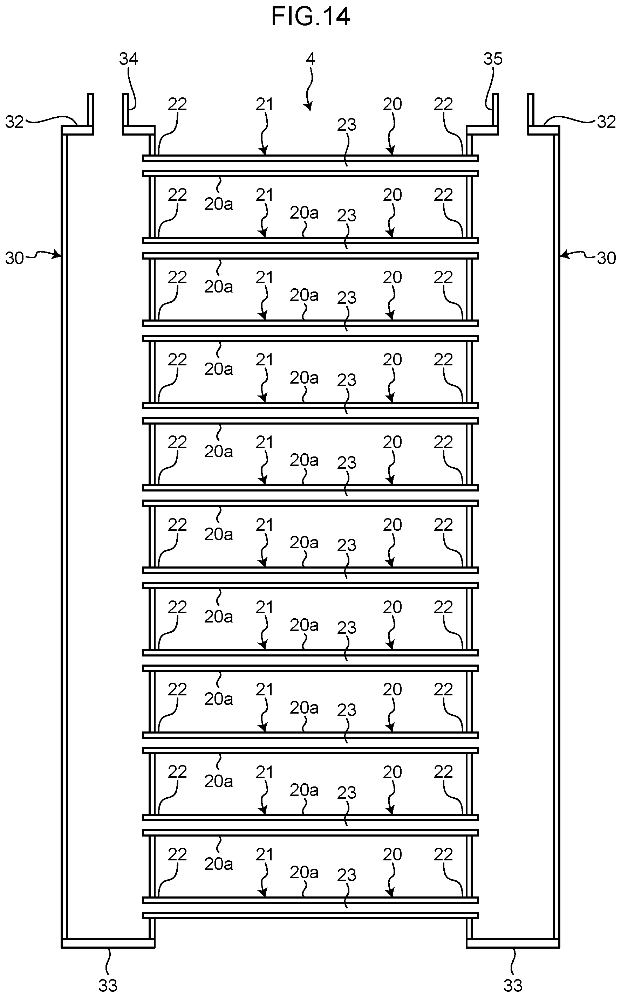

As illustrated in FIG. 14, the cooling device 4 is an integrated structure in which a plurality of coolers 20 is joined to the pair of pipes 30. The cooler 20 includes a cooling portion 21 and a connecting portion 22. The cooling portion 21 is a portion including a cooling surface 20a. The cooling portion 21 is a hollow plate member, and internally includes a flow path 23. The coolant circulates through the flow path 23. The cooling portion 21 is disposed between the battery cells 2 and forms the stacked body together with the battery cells 2. The connecting portion 22 is formed on both end sides of the cooling portion 21 and is connected to the pipe 30. In the cooling device 4, the coolers 20 are disposed so as to allow the cooling surface 20a to face each other, with the connecting portion 22 of the cooler 20 being brazed to the pipe 30. The cooler 20 and the pipe 30 are both formed of metal. FIG. 14 illustrates the cooler 20 in a state before deformation, where the thickness in the X direction remains thin.

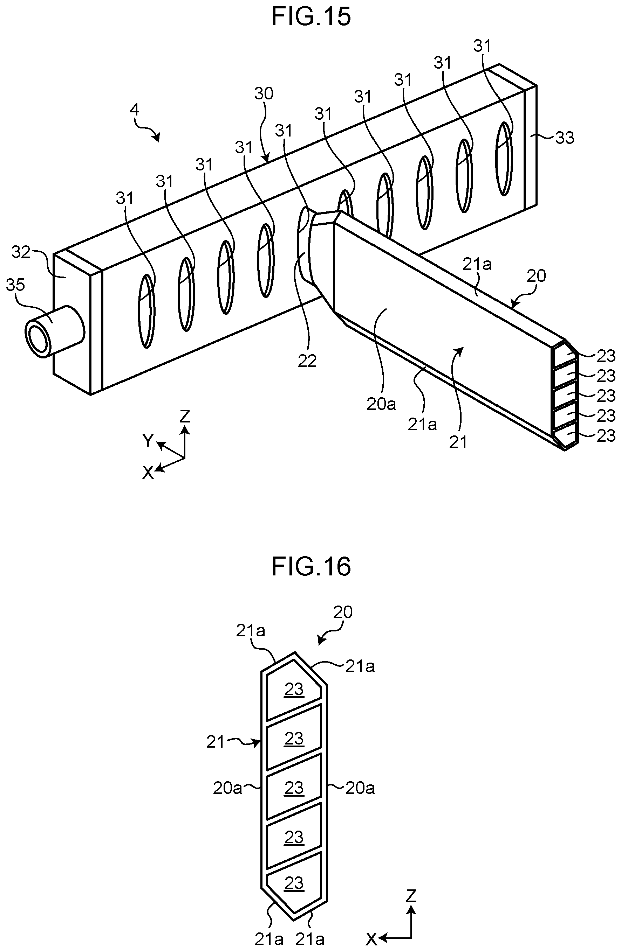

As illustrated in FIG. 15, the pipe 30 is a square pipe extending in the X direction. The pipe 30 has a plurality of connecting ports 31. The connecting port 31 is an opening that opens in the Y direction. For example, the pipe 30 is formed by extrusion molding, and undergoes machining to perforate the connecting port 31. The connecting portion 22 of the cooler 20 is connected to the connecting port 31. The connecting portion 22 of the cooler 20 is fitted into the connecting port 31 of the pipe 30. The connecting portion 22 and the connecting port 31 in the fitted state are joined to each other by brazing. The plurality of coolers 20 is connected to the pipe 30. FIG. 15 illustrates the cooler 20 in a state after deformation with an increased thickness in the X direction.

A first end cap 32 and a second end cap 33 are brazed to the pipe 30. The first end cap 32 is joined to the pipe 30 so as to cover one open end of the pipe 30 in the X direction. The second end cap 33 is joined to the pipe 30 so as to cover the other open end of the pipe 30 in the X direction. The first end cap 32 and the second end cap 33 are formed by machining. As illustrated in FIG. 14, in the pair of pipes 30, the first end cap 32 of one pipe 30 is joined with a first tube portion 34, while the first end cap 32 of the other pipe 30 is joined with a second tube portion 35. The first tube portion 34 is a tube portion on the inlet side. The coolant supplied to the cooling device 4 flows into the cooling device 4 through the first tube portion 34. The second tube portion 35 is a tube portion on the outlet side. The coolant discharged from the cooling device 4 flows out of the cooling device 4 through the second tube portion 35. The first tube portion 34 and the second tube portion 35 are formed by extrusion molding.

As illustrated in FIG. 15, the cooling portion 21 includes a perforated tube extending in the Y direction. The cooling portion 21 has a plurality of flow paths 23 partitioned in the Z direction. The connecting portion 22 has one flow path not partitioned in the Z direction. The flow path of the cooler 20 is formed so as to branch from the flow path of the connecting portion 22 on the upstream side to the plurality of flow paths 23 of the cooling portion 21 and merge from the cooling portion 21 at the flow path of the connecting portion 22 on the downstream side.

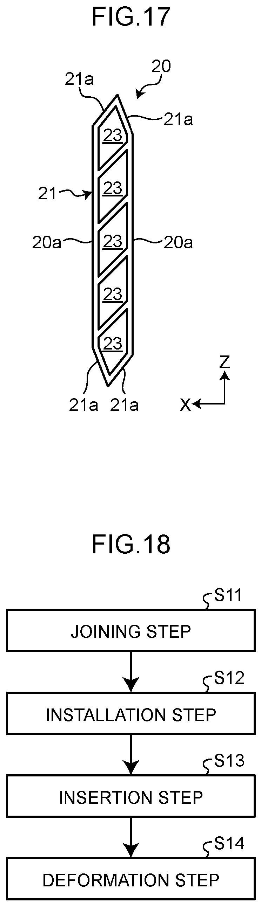

The cooling portion 21 includes a deformable portion 21a. The deformable portion 21a is a portion that is deformed to have an increased thickness of the cooling portion 21 in the X direction. As illustrated in FIGS. 16 and 17, the deformable portion 21a is formed in a shape inclined with respect to the X direction and inclined with respect to the Z direction. The deformable portion 21a includes a deformable portion 21a formed in an inverted V shape toward one side in the Z direction and a deformable portion 21a formed in a V shape toward the other side in the Z direction. FIG. 16 illustrates a shape of the deformable portion 21a after deformation, while FIG. 17 illustrates a shape of the deformable portion 21a before deformation.

As illustrated in FIGS. 14 and 17, before deformation of the deformable portion 21a, the thickness of the cooling portion 21 in the X direction is small. As illustrated in FIGS. 13, 15, and 16, after deformation of the deformable portion 21a, the thickness of the cooling portion 21 in the X direction is large.

FIG. 18 is a flowchart illustrating a battery pack manufacturing method in the modification. The method of manufacturing the battery pack 1 includes a joining step (step S11), an installation step (step S12), an insertion step (step S13), and a deformation step (step S14).

First, the joining step joins the plurality of coolers 20 and the pair of pipes 30 to each other (step S11). The joining step forms the cooling device 4 of the integrated structure, and joins the constituent members of the cooling device 4 to each other so as to set the coolers 20 to have the cooling surfaces 20a to face each other. In the joining step, it is possible to braze all the constituent members together by applying a brazing paste to a portion to be joined and then putting the members in a furnace.

The constituent members of the cooling device 4 include the cooler 20, the pipe 30, the first end cap 32, the second end cap 33, the first tube portion 34, and the second tube portion 35. The first tube portion 34 is brazed to one first end cap 32. The second tube portion 35 is brazed to the other first end cap 32. The first end cap 32 is brazed to the pipe 30 so as to cover one open end of the pipe 30. The second end cap 33 is brazed to the pipe 30 so as to cover the other open end of the pipe 30. The connecting portion 22 of the cooler 20 is brazed to the pair of pipes 30.

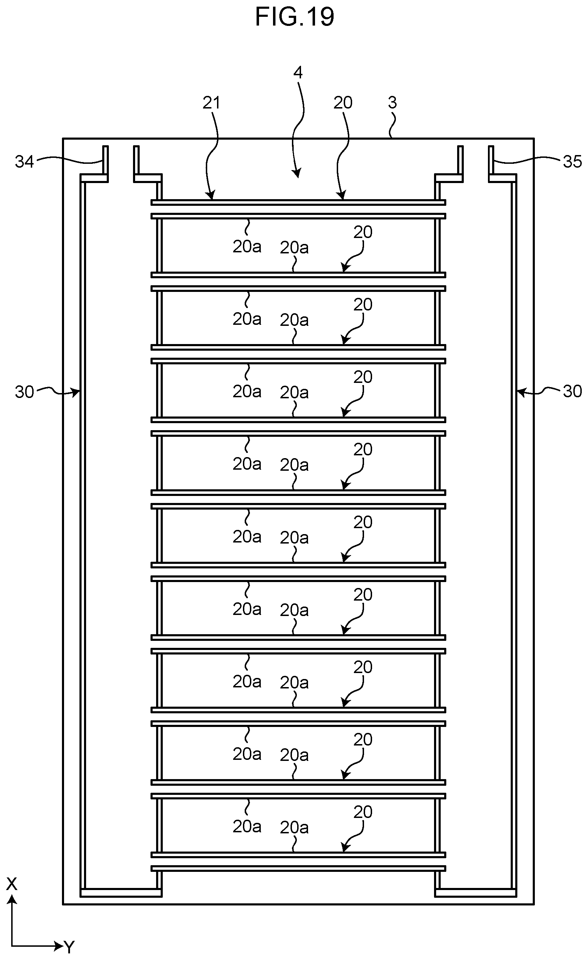

Next, in the installation step, the cooling device 4 being an integrated structure is installed inside the case 3 (step S12). In the installation step, as illustrated in FIG. 19, the cooling device 4 being an integrated structure is installed inside the case 3 in a state where the battery cell 2 is not installed.

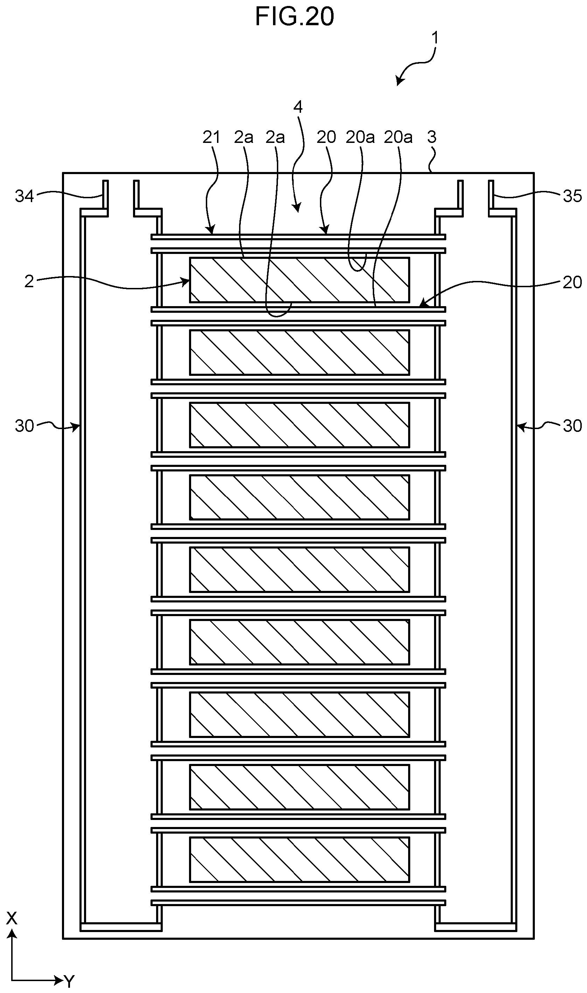

Next, the insertion step inserts the battery cells 2 between the coolers 20 (step S13). In the insertion step, as illustrated in FIG. 20, the battery cells 2 are inserted into spaces where cooling surfaces 20a face each other between the coolers 20 adjacent to each other. In the insertion step, in a state where the cooler 20 is not deformed, the battery cell 2 is disposed at a position where the flat surface 2a and the cooling surface 20a are not in contact with each other in a space where the cooling surfaces 20a face each other.

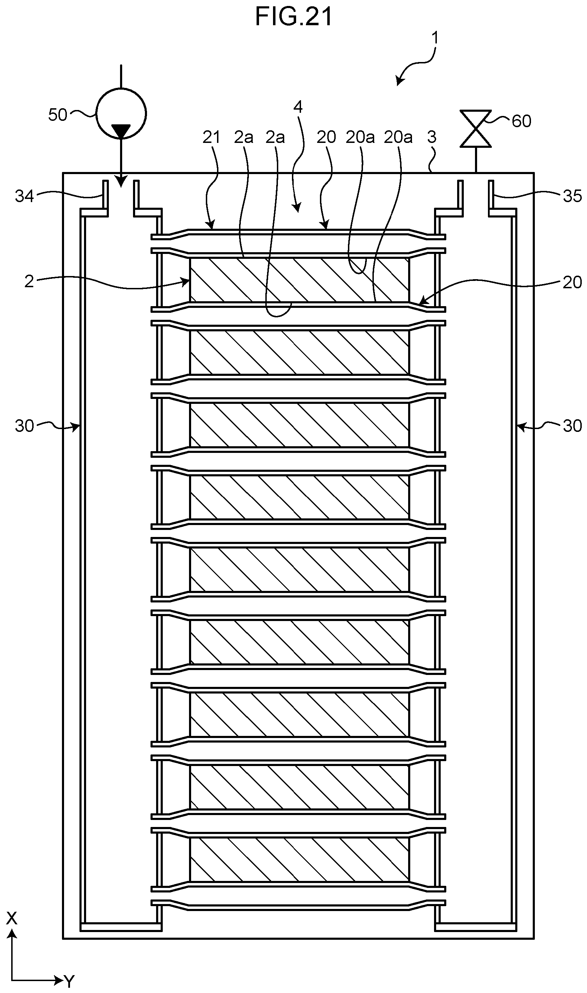

Subsequently, the deformation step increases the pressure inside the cooler 20 to expand the cooling portion 21 formed with the perforated tube (step S14). In the deformation step, after the cooling device 4 is disposed inside the case 3, as illustrated in FIG. 21, the second tube portion 35 side is closed by a valve 60 or the like, and the coolant inside the cooler 20 is supplied from the first tube portion 34 side by a pump 50 or the like to apply pressure to the inside of the cooler 20. At this time, the pressure inside the cooler 20 is set to be higher than the pressure outside the cooler 20. For example, the cooling portion 21 is expanded at a pressure higher than the atmospheric pressure and lower than 2 MPa. With the increased pressure inside the cooler 20, the deformable portion 21a can be deformed to expand the flow path 23 inside the cooler 20 in the X direction. The deformation step deforms the cooling portion 21 so as to increase the thickness of the cooling portion 21 in the X direction, thereby bringing the cooling surface 20a into close contact with battery cell 2. That is, the deformation step includes the contact step. The deformation step deforms the cooler 20 to cause the cooling surface 20a to abut on the flat surface 2a of the battery cell 2. After the battery cell 2 is inserted into the facing space of the cooling surfaces 20a, the coolant is supplied from the pump 50 to the first tube portion 34 to increase the pressure inside the cooler 20. When the pressure inside the cooler 20 increases to be deformed so as to increase the thickness of the cooling portion 21 in the X direction, the cooling surface 20a can be brought into close contact with the flat surface 2a. In the deformation step, the cooling surface 20a is caused to abut on the battery cells 2 to form a stacked body in which the coolers 20 and the battery cells 2 are stacked, and the cooler 20 compresses the battery cells 2 in the stacking direction of the stacked body.

In this manner, also in the battery pack 1 of the modification, all the constituent members in the cooling device 4 are joined by brazing, facilitating assembly, and suppressing the assembly cost. In addition, there is no need to provide a component for connecting the adjacent coolers 20 to each other for each of the facing portions, making it possible to suppress an increase in the number of components.

### EXPLANATION OF SIGNS

- 1:: BATTERY PACK

- 2:: BATTERY CELL
- 2A:: FLAT SURFACE
- 3:: CASE
- 4:: COOLING DEVICE
- 10:: COOLER
- 10A:: COOLING SURFACE
- 11:: COOLING PORTION
- 12:: TUBE PORTION
- 13:: FLOW PATH
- 14:: DIAPHRAGM PORTION
- 14A:: GROOVE
- 15:: FLAT PLATE PORTION
- 16:: FIRST TUBE PORTION
- 17:: SECOND TUBE PORTION
- 18:: THIRD TUBE PORTION
- 19:: FORTH TUBE PORTION
- 20:: COOLER
- 20A:: COOLING SURFACE
- 21:: COOLING PORTION
- 22:: CONNECTING PORTION
- 23:: FLOW PATH
- 30:: PIPE
- 31:: CONNECTING PORT
- 32:: FIRST END CAP
- 33:: SECOND END CAP
- 34:: FIRST TUBE PORTION
- 35:: SECOND TUBE PORTION

## Claims

1. A battery pack (1) comprising:
a plurality of battery cells (2);
a case (3) to accommodate the plurality of battery cells (2); and
a cooling device (4), provided inside the case (3), for cooling the battery cells (2) with a coolant,
the cooling device (4) including a plurality of coolers (10),
the cooler (10) including: a flow path (13) that allows the coolant to circulate; and a cooling surface (10a) that comes in contact with the battery cells (2),
the plurality of coolers (10) and the plurality of battery cells (2) being alternately stacked in a first direction inside the case (3), wherein
the cooling device (4) is an integrated structure in which the plurality of coolers (10) is joined with each other, and
the cooler (10) is deformable so as to displace the cooling surface (10a) in the first direction in accordance with a pressure inside the cooler (10).

2. The battery pack (1) according to claim 1, wherein
when the pressure inside the cooler (10) is in a negative pressure state lower than a pressure outside the cooler (10) in a state where the cooler (10) is disposed inside the case (3), the cooler (10) is deformed to displace the cooling surface (10a) to a position not coming in contact with the battery cell (2).

3. The battery pack (1) according to claim 2, wherein the cooler (10) includes:
a diaphragm portion (14) including the cooling surface (10a);
a flat plate portion (15) formed on a peripheral edge of the diaphragm portion (14) and extending in a second direction orthogonal to the first direction; and
a tube portion (12) extending from the flat plate portion (15) in the first direction.

4. The battery pack (1) according to claim 3, wherein
in the coolers (10) being adjacent to each other, the tube portion (12) of one cooler (10) and the tube portion (12) of another cooler (10) are joined with each other.

5. The battery pack (1) according to claim 1, wherein
when the pressure inside the cooler (10) is a pressure higher than a pressure outside the cooler (10) in a state where the cooler (10) is disposed inside the case (3), the cooler (10) is deformed to displace the cooling surface (10a) to a position coming in contact with the battery cell (2).

6. A battery pack manufacturing method comprising:
a joining step of joining a plurality of coolers (10) so as to form a cooling device (4) being an integrated structure including the plurality of coolers (10) and so as to form a structure in which the coolers (10) have their cooling surfaces (10a) facing each other;
an installation step of installing the cooling device (4) being the integrated structure, inside a case (3) for accommodating a plurality of battery cells (2);
a deformation step of deforming the cooler (10) so as to displace the cooling surface (10a) to a position not coming in contact with the battery cells (2) by setting a pressure inside the cooler (10) to a negative pressure state lower than a pressure outside the cooler (10), the deformation step being performed after the cooling device (4) being the integrated structure is installed inside the case (3);
an insertion step of inserting the battery cells (2) between the coolers (10) adjacent to each other in a state where the cooling surface (10a) is displaced due to the negative pressure state; and
a contact step of canceling the negative pressure state and bringing the cooling surface (10a) into contact with the battery cells (2), the contact step being performed after the battery cells (2) are inserted between the coolers (10).

7. The battery pack manufacturing method according to claim 6, wherein
the cooling device (4) being the integrated structure has a structure in which the coolers (10) are joined to each other, and
the joining step includes a step of joining the coolers (10) to each other by brazing.

8. The battery pack manufacturing method according to claim 7, wherein
the insertion step includes a step of disposing the battery cells (2) inside the case (3) at a position where the battery cells (2) and the cooling surface (10a) are not in contact with each other in a state where the cooler (10) is deformed, and
the contact step includes a step of causing the cooling surface (10a) to abut on the battery cells (2) to form a stacked body in which the cooler (10) and the battery cells (2) are stacked, and of compressing the battery cells (2) in a stacking direction of the stacked body by the cooler (10).

9. A battery pack manufacturing method comprising:
a joining step of joining a plurality of coolers (20) so as to form a cooling device (4) being an integrated structure including the plurality of coolers (20) and so as to form a structure in which the coolers (20) have their cooling surfaces (20a) facing each other;
an installation step of installing the cooling device (4) being the integrated structure, inside a case (3) for accommodating a plurality of battery cells (2);
an insertion step of inserting the battery cells (2) between the coolers (20) adjacent to each other after the cooling device (4) being the integrated structure is installed inside the case (3); and
a deformation step of deforming the cooler (20) so as to displace the cooling surface (20a) to a position coming in contact with the battery cells (2) by setting a pressure inside the cooler (20) to be higher than a pressure outside the cooler (20), the deformation step being performed after the battery cell (2) is inserted between the coolers (20).

10. The battery pack manufacturing method according to claim 9, wherein
the cooling device (4) being the integrated structure has a structure in which the coolers (20) are joined to a pipe (30), and
the joining step includes a step of joining the coolers (20) and the pipe (30) to each other by brazing.

11. The battery pack manufacturing method according to claim 10, wherein
the insertion step includes a step of disposing the battery cells (2) inside the case (3) at a position where the battery cells (2) and the cooling surface (20a) are not in contact with each other in a state where the cooler (20) is not deformed, and
the deformation step includes a step of causing the cooling surface (20a) to abut on the battery cells (2) to form a stacked body in which the cooler (20) and the battery cells (2) are stacked, and of compressing the battery cells (2) in a stacking direction of the stacked body by the cooler (20).
